# EUROPEAN PATENT APPLICATION

(11) **EP 4 780 092 A1**
(43) Date of publication of application: **22.07.2026**
(21) Application number: 23952237.8
(22) Date of filing: 13.09.2023
(51) Int. Cl.: H04W 56/00, H04W 72/0446, H04W 72/0457, H04W 84/12

(54) **ACCESS POINT, TERMINAL DEVICE, AND COMMUNICATION METHOD THEREFOR**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); NAGANO, Kotaro, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Meissner Bolte Partnerschaft mbB
(86) International application number: PCT/JP2023/033442
(87) International publication number: WO 2025/057344

(57) **Abstract**

An access point which is a first access point in one aspect configures a communication system together with a second access point, a third access point, and a terminal apparatus. The first access point is configured to transmit a timestamp related to a first timer corresponding to the first access point to the second access point and the third access point, receive a first offset between the first timer and a second timer corresponding to the second access point from the second access point, receive a second offset between the first timer and a third timer corresponding to the third access point from the third access point, and transmit the first offset and the second offset to each of the second access point and the third access point.

## Description

### [Technical Field]

Embodiments relate to an access point, a terminal apparatus, and a communication method thereof.

### [Background Art]

A multi-link transmission method using a wireless local area network (LAN) is known as a communication system for wirelessly connecting an access point (AP) and a terminal apparatus.

In a multi-link transmission method, data exchange between a multi-link device in an access point (AP MLD) and a multi-link device in a terminal apparatus (non-AP MLD) is implemented by a wireless link between a plurality of affiliated APs in the access point and a plurality of affiliated STAs in the terminal apparatus.

As a cooperative operation among a plurality of affiliated APs in a multi-link transmission method, R-TWT (restricted target wake time) technology or the like has been proposed.

### [Citation List]

### [Non Patent Literature]

[NPL 1] IEEE802.11be D3.0, "35.3 Multi-link operation", "35.8 Restricted TWT (R-TWT)", p479-p586, p617-p621, January 2023

### [Summary of Invention]

### [Technical Problem]

From the viewpoint of improving a wireless communication environment, it is desirable that a transmission method (multi-AP transmission method) be established in which a terminal apparatus can jointly use wireless links with a plurality of affiliated APs of a plurality of access points.

However, the plurality of access points each operate on the basis of pieces of different time information. For this reason, when performing cooperative operations among a plurality of access points in a multi-AP transmission method, it may be required to synchronize time between the plurality of access points and the terminal apparatus in order to maintain a good wireless communication environment.

The present invention has been made focusing on the above circumstances, and an object thereof is to provide a sharing access point, a shared access point, a terminal apparatus, and a communication method therefor which are capable of improving a wireless communication environment.

### [Solution to Problem]

An access point which is a first access point in one aspect configures a communication system together with a second access point, a third access point, and a terminal apparatus. The first access point is configured to transmit a timestamp related to a first timer corresponding to the first access point to the second access point and the third access point, receive a first offset between the first timer and a second timer corresponding to the second access point from the second access point, receive a second offset between the first timer and a third timer corresponding to the third access point from the third access point, and transmit the first offset and the second offset to each of the second access point and the third access point.

### [Advantageous Effects of Invention]

According to an embodiment, it is possible to provide a sharing access point, a shared access point, a terminal apparatus, and a communication method thereof that improve a wireless communication environment.

### [Brief Description of Drawings]

[Fig. 1] Fig. 1 is a block diagram showing the configuration of a communication system according to a first embodiment.
[Fig. 2] Fig. 2 is a block diagram showing an example of a hardware configuration of a sharing AP according to the first embodiment.
[Fig. 3] Fig. 3 is a block diagram showing an example of a hardware configuration of a shared AP according to the first embodiment.
[Fig. 4] Fig. 4 is a block diagram showing an example of a hardware configuration of a terminal apparatus according to the first embodiment.
[Fig. 5] Fig. 5 is a block diagram showing an example of a functional configuration of a sharing AP according to the first embodiment.
[Fig. 6] Fig. 6 is a diagram showing an example of a data structure of multi-AP management information stored in the sharing AP according to the first embodiment.
[Fig. 7] Fig. 7 is a diagram showing an example of a data structure of terminal management information stored in the sharing AP according to the first embodiment.
[Fig. 8] Fig. 8 is a diagram showing an example of a data structure of time management information stored in the sharing AP according to the first embodiment.
[Fig. 9] Fig. 9 is a diagram showing an example of a beacon frame related to time synchronization transmitted from the sharing AP according to the first embodiment.
[Fig. 10] Fig. 10 is a block diagram showing an example of a functional configuration of the shared AP according to the first embodiment.
[Fig. 11] Fig. 11 is a diagram showing an example of a data structure of link management information stored in the shared AP according to the first embodiment.
[Fig. 12] Fig. 12 is a diagram showing an example of a beacon frame related to time synchronization transmitted from the shared AP according to the first embodiment.
[Fig. 13] Fig. 13 is a block diagram showing an example of a functional configuration of the terminal apparatus according to the first embodiment.
[Fig. 14] Fig. 14 is a diagram showing an example of a data structure of link management information stored in the terminal apparatus according to the first embodiment.
[Fig. 15] Fig. 15 is a sequence diagram showing an example of a time synchronization process in a communication system according to the first embodiment.
[Fig. 16] Fig. 16 is a sequence diagram showing an example of an R-TWT cooperative process in the communication system according to the first embodiment.
[Fig. 17] Fig. 17 is a block diagram showing an example of a functional configuration of a sharing AP according to a second embodiment.
[Fig. 18] Fig. 18 is a sequence diagram showing an example of a reference timer generation process in a communication system according to the second embodiment.
[Fig. 19] Fig. 19 is a block diagram showing an example of a functional configuration of a sharing AP according to a first modification example.
[Fig. 20] Fig. 20 is a block diagram showing the configuration of a communication system according to a second modification example.

### [Description of Embodiments]

Hereinafter, embodiments will be described with reference to the drawings. In the following description, components having the same functions and configurations are denoted by the same reference numerals.

### 1. First Embodiment

### 1.1 Configuration

### 1.1.1 Communication System

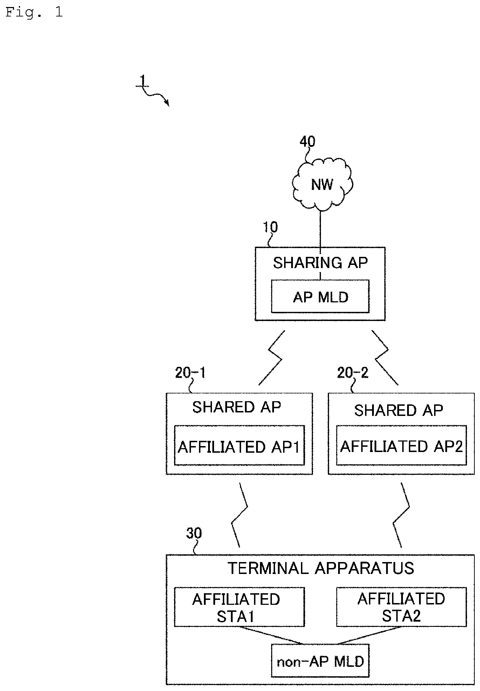

Fig. 1 is a block diagram showing an example of the configuration of a communication system according to a first embodiment. As shown in Fig. 1, a communication system 1 includes a sharing access point (AP) 10 which is a first access point, shared access points (APs) 20-1 and 20-2 which are a second access point and a third access point, a terminal apparatus 30, and a network 40.

The sharing AP 10, the shared APs 20-1 and 20-2, and the terminal apparatus 30 have, for example, a wireless communication function based on an open systems interconnection (OSI) reference model. In the OSI reference model, the wireless communication function is divided into seven layers (first layer: physical layer, second layer: data link layer, third layer: network layer, fourth layer: transport layer, fifth layer: session layer, sixth layer: presentation layer, and seventh layer: application layer). The data link layer includes a logical link control (LLC) sub-layer and a media access control (MAC) sub-layer.

Specifically, the sharing AP 10 is, for example, an access point of a wireless LAN. The sharing AP 10 includes an AP MLD. The AP MLD is a multi-link device (MLD) within the sharing AP 10, and is an entity configured to be logically connected to the terminal apparatus 30 in a wireless manner. That is, the AP MLD can be an end point on the sharing AP 10 side in data exchange with the terminal apparatus 30 via wireless communication. The AP MLD is configured to communicate with a server (not shown) on the network 40 via wired or wireless communication. The AP MLD is configured to communicate with each of the shared APs 20-1 and 20-2 via wired or wireless communication.

Each of the shared APs 20-1 and 20-2 are, for example, access points of a wireless LAN. The shared APs 20-1 and 20-2 are different access points and are located at positions physically separated from each other. For this reason, the shared APs 20-1 and 20-2 may have different communicative areas. The shared APs 20-1 and 20-2 include an affiliated AP1 and an affiliated AP2, respectively. The affiliated AP1 and the affiliated AP2 are entities configured to be physically connected to the terminal apparatus 30 in a wireless manner. That is, the affiliated AP1 and the affiliated AP2 each have a physical configuration for exchanging data with the terminal apparatus 30 via a wireless link. The affiliated AP1 and the affiliated AP2 each belong to the AP MLD. Here, "the affiliated AP belongs to the AP MLD" means that the affiliated AP can be used for data exchange between the AP MLD and the terminal apparatus.

Note that the shared APs 20-1 and 20-2 have the same configuration. Hereinafter, when the shared APs 20-1 and 20-2 are not particularly distinguished from each other, they may be referred to as the shared APs 20. Furthermore, when the affiliated AP1 and the affiliated AP2 are not particularly distinguished from each other, they may be referred to as the affiliated APs.

The terminal apparatus 30 is, for example, a smartphone or a personal computer (PC), and is a portable wireless terminal apparatus that complies with the IEEE 802.11 standard. The terminal apparatus 30 includes a non-AP MLD, an affiliated STA1, and an affiliated STA2.

The non-AP MLD is a multi-link device within the terminal apparatus 30, and is an entity configured to logically connect to the sharing AP 10 in a wireless manner. That is, the non-AP MLD can be an end point on the terminal apparatus 30 side in data exchange with the sharing AP 10 via wireless communication. The non-AP MLD is connected to the affiliated STA1 and the affiliated STA2 via wired connection.

The affiliated STA1 and the affiliated STA2 are entities configured to be physically connected to the affiliated AP in a wireless manner. That is, each of the affiliated STA1 and the affiliated STA2 has a physical configuration that exchanges data with the affiliated AP via a wireless link. Each of the affiliated STA1 and the affiliated STA2 belongs to the non-AP MLD. Here, "the affiliated STA belongs to the non-AP MLD" means that the affiliated STA can be used for data exchange between the non-AP MLD and the AP MLD.

Note that the affiliated STA1 and the affiliated STA2 have the same configuration. Hereinafter, when the affiliated STA1 and the affiliated STA2 are not particularly distinguished from each other, they may be referred to as the affiliated STAs.

In the present embodiment, the AP MLD and the non-AP MLD are configured to exchange data via a wireless link between a plurality of affiliated APs provided in different access points and a plurality of affiliated STAs provided in the same terminal apparatus 30. Such a data transmission method is also referred to as a multi-AP transmission method.

The example of Fig. 1 shows a case where the AP MLD in the sharing AP 10 and the non-AP MLD in the terminal apparatus 30 exchange data using a wireless link between the affiliated AP1 in the shared AP 20-1 and the affiliated STA1 in the terminal apparatus 30 and a wireless link between the affiliated AP2 in the shared AP 20-2 and the affiliated STA2 in the terminal apparatus 30.

Hereinafter, for convenience of description, a case where the sharing AP 10 and the shared AP 20 are connected wirelessly will be described.

### 1.1.2 Hardware Configuration

Next, the hardware configurations of the sharing AP, the shared AP, and the terminal apparatus in the communication system according to the first embodiment will be described.

### 1.1.2.1 Hardware Configuration of Sharing AP

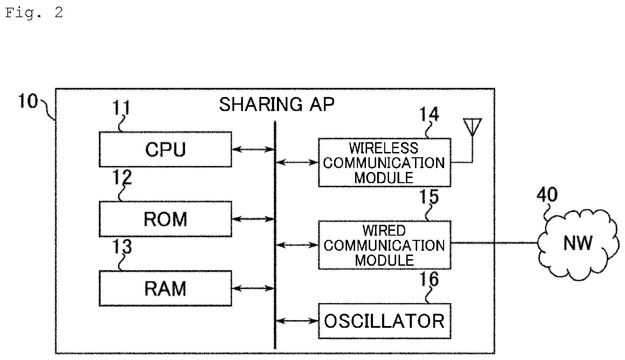

Fig. 2 is a block diagram showing an example of a hardware configuration of the sharing AP according to the first embodiment. As shown in Fig. 2, the sharing AP 10 includes, for example, a central processing unit (CPU) 11, a read only memory (ROM) 12, a random access memory (RAM) 13, a wireless communication module 14, a wired communication module 15, and an oscillator 16.

The CPU 11 is a processing circuit that controls an operation of the entire sharing AP 10. The ROM 12 is, for example, a non-volatile semiconductor memory. The ROM 12 stores programs and data for controlling the sharing AP 10. The RAM 13 is, for example, a volatile semiconductor memory. The RAM 13 is used as a work area for the CPU 11. The wireless communication module 14 is a circuit used for transmitting and receiving data using wireless signals. The wireless communication module 14 is connected to an antenna. The wired communication module 15 is a circuit used for transmitting and receiving data using wired signals. The wired communication module 15 is connected to the network 40. The oscillator 16 functions as a clock for generating time information to be used in the sharing AP 10. The time information is also referred to as a time synchronization function (TSF) timer. The accuracy of the TSF timer generated by the oscillator 16 is high enough for use as a TSF timer (reference timer) that is a reference when the sharing AP 10, the shared AP 20, and the terminal apparatus 30 operate in synchronization with each other. In the first embodiment, the TSF timer generated by the oscillator 16 matches the reference timer.

### 1.1.2.2 Hardware Configuration of Shared AP

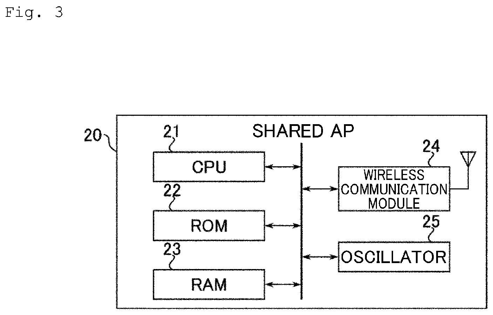

Fig. 3 is a block diagram showing an example of a hardware configuration of the shared AP according to the first embodiment. As shown in Fig. 3, the shared AP 20 includes, for example, a CPU 21, a ROM 22, a RAM 23, a wireless communication module 24, and an oscillator 25.

The CPU 21 is a processing circuit that controls an operation of the entire shared AP 20. The ROM 22 is, for example, a non-volatile semiconductor memory. The ROM 22 stores programs and data for controlling the shared AP 20. The RAM 23 is, for example, a volatile semiconductor memory. The RAM 23 is used as a work area of the CPU 21. The wireless communication module 24 is a circuit used for transmitting and receiving data using wireless signals. The wireless communication module 24 is connected to an antenna. The oscillator 25 operates independently of the oscillator 16 and functions as a clock for generating a TSF timer used in the shared AP 20. The accuracy of the TSF timer generated by the oscillator 25 may not be high enough for use as a reference timer. That is, the TSF timer generated by the oscillator 25 may have an offset with the reference timer.

### 1.1.2.3 Hardware Configuration of Terminal Apparatus

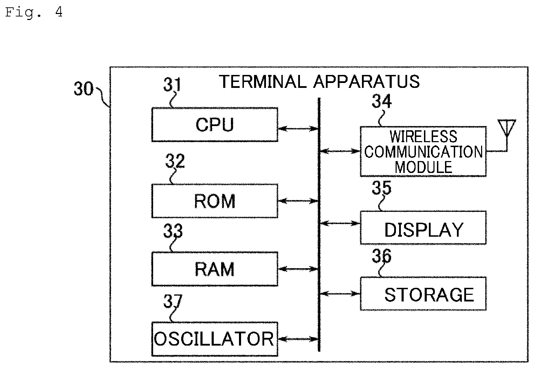

Fig. 4 is a block diagram showing an example of a hardware configuration of the terminal apparatus according to the first embodiment. As shown in Fig. 4, the terminal apparatus 30 includes, for example, a CPU 31, a ROM 32, a RAM 33, a wireless communication module 34, a display 35, a storage 36, and an oscillator 37.

The CPU 31 is a processing circuit that controls the overall operation of the terminal apparatus 30. The ROM 32 is, for example, a non-volatile semiconductor memory. The ROM 32 stores programs and data for controlling the terminal apparatus 30. The RAM 33 is, for example, a volatile semiconductor memory. The RAM 33 is used as a work area for the CPU 31. The wireless communication module 34 is a circuit used for transmitting and receiving data using wireless signals. The wireless communication module 34 is connected to an antenna. The display 35 is, for example, a liquid crystal display (LCD) or an electroluminescence (EL) display. The display 35 displays a graphical user interface (GUI) or the like corresponding to application software. The storage 36 is a non-volatile storage device. The storage 36 stores system software of the terminal apparatus 30, and the like. The oscillator 37 operates independently of the oscillators 16 and 25 and functions as a clock for generating a TSF timer used in the terminal apparatus 30. The accuracy of the TSF timer generated by the oscillator 37 may not be high enough for use as a reference timer. That is, the TSF timer generated by the oscillator 37 may have an offset with the reference timer.

### 1.1.3 Functional Configuration

Next, the functional configurations of the sharing AP, the shared AP, and the terminal apparatus in the communication system according to the first embodiment will be described.

### 1.1.3.1 Functional Configuration of Sharing AP

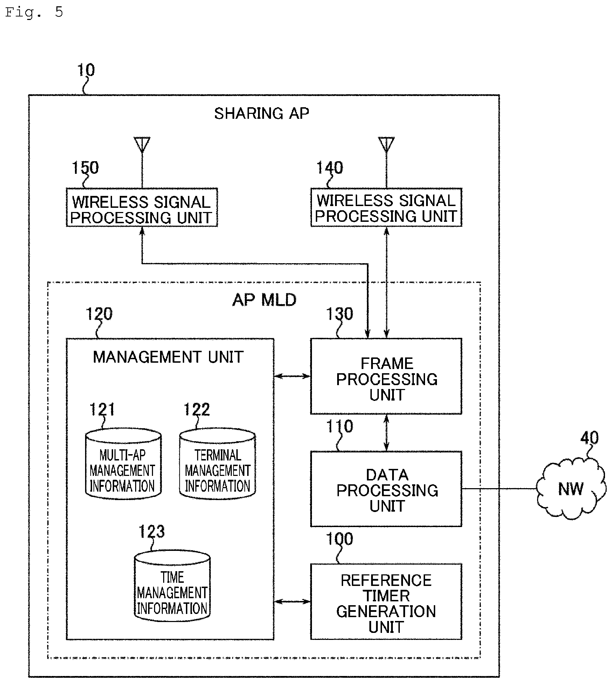

Fig. 5 is a block diagram showing an example of a functional configuration of the sharing AP according to the first embodiment.

The sharing AP 10 functions as a computer that includes a reference timer generation unit 100, a data processing unit 110, a management unit 120, a frame processing unit 130, and wireless signal processing units 140 and 150. The data processing unit 110 is a functional block that executes processing corresponding to the LLC sub-layer of the second layer and the third to seventh layers. The management unit 120 and the frame processing unit 130 are functional blocks which execute processing corresponding to the MAC sub-layer of the second layer. The wireless signal processing units 140 and 150 are functional blocks that execute processing corresponding to the first layer. The reference timer generation unit 100, the data processing unit 110, the management unit 120, and the frame processing unit 130 function as an AP MLD.

The reference timer generation unit 100 generates a reference timer on the basis of an output of the oscillator 16. The reference timer generation unit 100 outputs the generated reference timer to the management unit 120.

The data processing unit 110 outputs data input from the network 40 via the LLC layer to the frame processing unit 130. The data processing unit 110 also outputs data input from the frame processing unit 130 to the network 40 via the LLC layer.

The management unit 120 controls logical wireless connection between the AP MLD and the non-AP MLD in a multi-AP transmission method. For example, the management unit 120 executes a multi-AP connection process in response to an association request from the terminal apparatus 30. The management unit 120 also manages a deviation (offset) between the reference timer and the TSF timer applied to each of the shared APs 20-1 and 20-2. The management unit 120 stores multi-AP management information 121, terminal management information 122, and time management information 123.

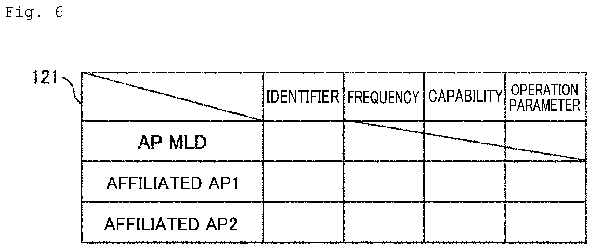

Fig. 6 is a diagram showing an example of a data structure of multi-AP management information stored in the sharing AP according to the first embodiment.

As shown in Fig. 6, the multi-AP management information 121 includes information on various entities (that is, the AP MLD, the affiliated AP1, and the affiliated AP2) on the access point side used in the multi-AP transmission method. The information on the various entities on the access point side used in the multi-AP transmission method specifically includes, for example, an identifier, a frequency band, capability information, and operation parameters.

The identifier includes, for example, a MAC address of the corresponding entity.

The frequency band includes information indicating the frequency band used by the corresponding entity. Examples of applicable frequency bands include a 2.4 GHz band, a 5 GHz band, a 6 GHz band, a 45 GHz band, and a 60 GHz band. Each frequency band includes a plurality of channels.

The capability information includes, for example, information indicating whether a corresponding entity supports a multi-AP transmission method.

The operation parameters include, for example, CWmin, CWmax, an arbitration interframe space (AIFS), and transmission opportunity (TXOP) Limit. CWmin and CWmax indicate minimum and maximum values of a contention window, respectively. The contention window is a parameter used to calculate backoff that is a transmission waiting time for collision avoidance. AIFS is a fixed transmission waiting time set for each traffic access category. The traffic access category includes, for example, "voice (VO)", "video (VI)", "best effort (BE)", "background (BK)", and "low latency (LL)". The TXOPLimit indicates an upper limit of the channel occupation period TXOP.

Note that the frequency band, capability information, and operation parameters for the AP MLD may not be stored.

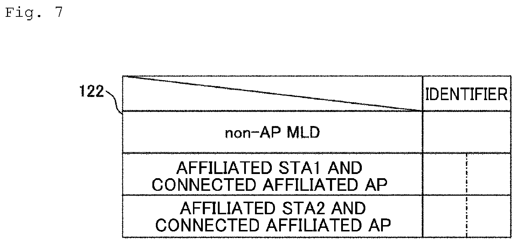

Fig. 7 is a diagram showing an example of a data structure of terminal management information stored in the sharing AP according to the first embodiment.

As shown in Fig. 7, the terminal management information 122 stores information on the connection status of the terminal apparatus 30 that is wirelessly connected to the sharing AP 10 in the multi-AP transmission method. Specifically, for example, the terminal management information 122 stores an identifier of the non-AP MLD, a set including an identifier of the affiliated STA1 and an identifier of the affiliated AP wirelessly connected to the affiliated STA1, as well as a set including an identifier of the affiliated STA2 and an identifier of the affiliated AP wirelessly connected to the affiliated STA2. Here, the identifier includes a MAC address of a target entity.

In the case of the connection example shown in Fig. 1, the affiliated AP wirelessly connected to the affiliated STA1 and the affiliated AP wirelessly connected to the affiliated STA2 are respectively the affiliated AP1 and the affiliated AP2.

Prior to the start of the multi-AP connection, the management unit 120 transmits a MAC frame (beacon frame) including information stored in the multi-AP management information 121 to the shared APs 20-1 and 20-2 belonging to the sharing AP 10 by using wireless signal processing units 140 and 150. Further, in an association processing, the management unit 120 transmits an association notification based on the multi-AP management information 121 and the terminal management information 122 to the shared APs 20-1 and 20-2 belonging to the sharing AP 10 by using the wireless signal processing units 140 and 150.

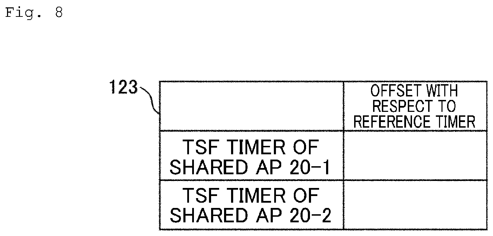

Fig. 8 is a diagram showing an example of a data structure of time management information stored in the sharing AP according to the first embodiment.

As shown in Fig. 8, the time management information 123 stores information on offsets of the TSF timers applied to the shared APs 20-1 and 20-2, respectively, with respect to the reference timer at a certain time (timestamp).

For example, when the offset of the TSF timer of the shared AP 20-1 with respect to the reference timer is +X (> 0) seconds, the TSF timer of the shared AP 20-1 is X seconds earlier than the reference timer. When the offset of the TSF timer of the shared AP 20-2 with respect to the reference timer is -X (<0) seconds, the TSF timer of the shared AP 20-2 is X seconds later than the reference timer.

After the start of the multi-AP connection, the management unit 120 transmits a beacon frame related to time synchronization to the shared APs 20-1 and 20-2 belonging to the sharing AP 10 by using the wireless signal processing units 140 and 150.

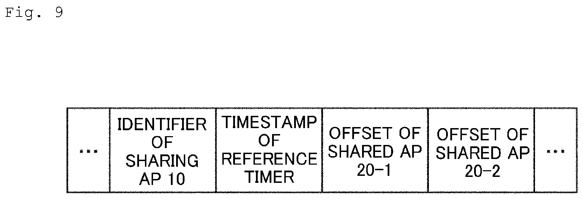

Fig. 9 is a diagram showing an example of a beacon frame related to time synchronization transmitted from the sharing AP according to the first embodiment.

As shown in Fig. 9, the beacon frame related to time synchronization transmitted from the sharing AP 10 includes information stored in the time management information 123. Specifically, for example, the beacon frame includes the identifier of the sharing AP 10, the timestamp of the reference timer, the offset of the TSF timer of the shared AP 20-1 with respect to the reference timer, and the offset of the TSF timer of the shared AP 20-2 with respect to the reference timer. Here, the identifier of the sharing AP 10 may be replaced with the identifier of the AP MLD.

Referring again to Fig. 5, the functional configuration of the sharing AP 10 will be described.

When data is input from the data processing unit 110 or the management unit 120, the frame processing unit 130 adds a MAC header to the input data to generate a MAC frame. Then, the frame processing unit 130 distributes the MAC frame to any of the wireless signal processing units 140 and 150. The frame processing unit 130 may determine a distribution destination of the MAC frame in accordance with a traffic identifier (TID) associated with the access category.

Furthermore, when the MAC frame is input from the wireless signal processing units 140 and 150, the frame processing unit 130 extracts data from the MAC frame and outputs the extracted data to the data processing unit 110 or the management unit 120 depending on the type of MAC frame. Specifically, when the MAC frame is a data frame, the frame processing unit 130 inputs the data to the data processing unit 110. When the MAC frame is a management frame or a control frame, the frame processing unit 130 inputs the data to the management unit 120.

Each of the wireless signal processing units 140 and 150 adds a preamble and the like to the MAC frame input from the frame processing unit 130 to generate a wireless frame. Each of the wireless signal processing units 140 and 150 converts the generated wireless frame into a wireless signal. In addition, each of the wireless signal processing units 140 and 150 radiates (transmits) the converted wireless signal via an antenna. The conversion process from a wireless frame to a wireless signal includes, for example, convolutional encoding processing, interleaving processing, sub-carrier modulation processing, inverse fast Fourier transform processing, OFDM modulation processing, and frequency conversion processing. Furthermore, each of the wireless signal processing units 140 and 150 converts the wireless signal received from the corresponding shared AP 20 via the antenna into a wireless frame. Examples of the conversion processing from the wireless signal to the wireless frame include frequency conversion processing, OFDM demodulation processing, fast Fourier transform processing, subcarrier demodulation processing, deinterleaving processing, and Viterbi decoding processing. Each of the wireless signal processing units 140 and 150 extracts a MAC frame from the converted wireless frame. Then, each of the wireless signal processing units 140 and 150 outputs the extracted MAC frame to the frame processing unit 130.

The wireless signal processing units 140 and 150 are configured to transmit and receive wireless signals using different frequency bands or channels. For example, the wireless signal processing unit 140 is used to individually transmit wireless signals to one wireless signal processing unit of the shared AP 20-1. The wireless signal processing unit 150 is used to individually transmit wireless signals to one wireless signal processing unit of the shared AP 20-2. In addition, for example, the wireless signal processing units 140 and 150 may be used to transmit wireless signals including the same information to a plurality of shared APs.

### 1.1.3.2 Functional Configuration of Shared AP

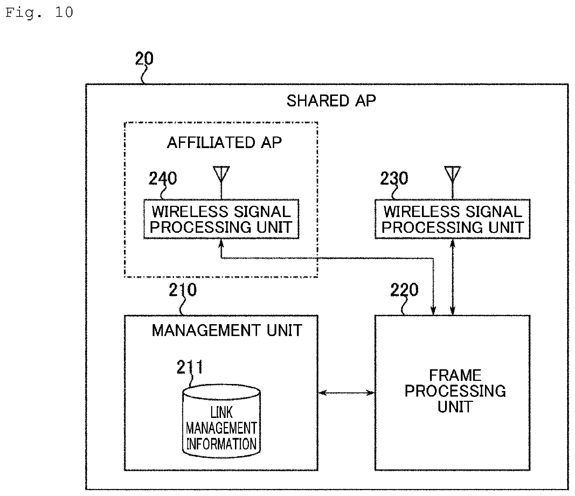

Fig. 10 is a block diagram showing an example of a functional configuration of the shared AP according to the first embodiment.

The shared AP 20 functions as a computer including a management unit 210, a frame processing unit 220, and wireless signal processing units 230 and 240. The management unit 210 and the frame processing unit 220 are functional blocks which execute processing corresponding to the MAC sub-layer of the second layer. The wireless signal processing units 230 and 240 are functional blocks that execute processing corresponding to the first layer. The management unit 210, the frame processing unit 220, and the wireless signal processing unit 240 function as an affiliated AP.

The management unit 210 generates a beacon frame including information on a multi-AP transmission method prior to the start of the multi-AP transmission method. The beacon frame related to the multi-AP transmission method includes multi-AP management information 121 received from the sharing AP 10. More specifically, the beacon frame related to the multi-AP transmission method includes an identifier of an AP MLD, identifiers of all affiliated APs that belong to the AP MLD and correspond to the multi-AP transmission method, a frequency, and operation parameters. The management unit 210 notifies the terminal apparatus 30 of the generated beacon frame related to the multi-AP transmission method via the wireless signal processing unit 240.

The management unit 210 also manages the state of physical wireless connection to the affiliated STA in the multi-AP transmission method. Specifically, for example, the management unit 210 stores link management information 211. The management unit 210 may further store the multi-AP management information 121 transmitted from the sharing AP 10.

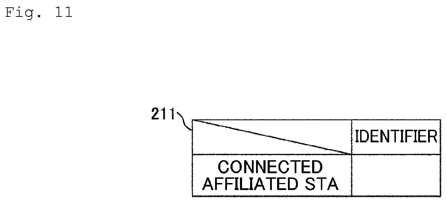

Fig. 11 is a diagram showing an example of a data structure of link management information stored in the shared AP according to the first embodiment.

As shown in Fig. 11, the link management information 211 stores information on an affiliated STA that is physically and wirelessly connected to the affiliated AP in the shared AP 20 in the multi-AP transmission method. The information on the affiliated STA that is connected to the affiliated AP in the shared AP 20 specifically includes, for example, an identifier.

The identifier includes, for example, a MAC address of the affiliated STA. In the case of the connection example shown in Fig. 1, the link management information 211 in the shared AP 20-1 includes a MAC address of the affiliated STA1. The link management information 211 in the shared AP 20-2 includes a MAC address of the affiliated STA2.

The management unit 210, after the start of the multi-AP connection, manages a TSF timer applied to its own station so that an offset from the reference timer falls within a threshold value (for example, ± 15 µs), while sharing the offset with the sharing AP 10. Then, the management unit 210 transmits a beacon frame, which is used for time synchronization with the terminal apparatus 30, to the terminal apparatus 30 by using the wireless signal processing unit 240. The management unit 210 may further store the time management information 123 transmitted from the sharing AP 10.

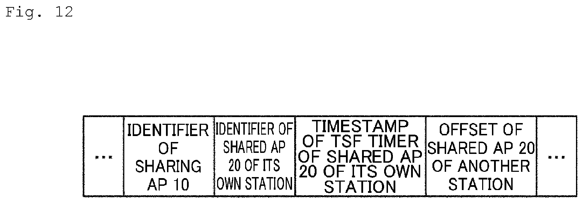

Fig. 12 is a diagram showing an example of a beacon frame related to time synchronization transmitted from a shared AP according to the first embodiment.

As shown in Fig. 12, the beacon frame related to the time synchronization transmitted from the shared AP 20 includes information related to the TSF timer applied to its own station. Specifically, for example, the beacon frame includes an identifier of a sharing AP 10, an identifier of a shared AP 20 of its own station, a timestamp of a TSF timer of the shared AP 20 of its own station, and an offset of a TSF timer of a shared AP 20 of another station. Here, the offset of the TSF timer of the shared AP 20 of the other station may be an offset with respect to the TSF timer of the shared AP 20 of its own station, or may be an offset with respect to the reference timer. When the offset of the TSF timer of the shared AP 20 of the other station is an offset with respect to the reference timer, the beacon frame further includes a timestamp of the reference timer or the offset of the TSF timer of the shared AP 20 of its own station with respect to the reference timer. Note that the offset of the TSF timer of the shared AP 20 of the other station may not be included in the beacon frame, but may be transmitted to the terminal apparatus 30 in response to a request from the terminal apparatus 30 side.

Referring again to Fig. 10, the functional configuration of the shared AP 20 will be described.

When a MAC frame is input from a sharing AP 10 via the wireless signal processing unit 230, the frame processing unit 220 extracts data from the MAC frame and performs processing according to the type of MAC frame. Specifically, when the MAC frame is a data frame, the frame processing unit 220 re-adds a MAC header to the data and inputs the data to the wireless signal processing unit 240. When the MAC frame is a management frame or a control frame, the frame processing unit 220 inputs the data to the management unit 210. In addition, when a MAC frame is input from an affiliated STA wirelessly connected via the wireless signal processing unit 240, the frame processing unit 220 re-adds a MAC header to data extracted from the MAC frame and inputs the data to the wireless signal processing unit 230.

The wireless signal processing units 230 and 240 add a preamble and the like to the MAC frame input from the frame processing unit 220 to generate a wireless frame. The wireless signal processing units 230 and 240 convert the generated wireless frame into a wireless signal. Then, the wireless signal processing units 230 and 240 radiate (transmit) the converted wireless signals to the sharing AP 10 and the wirelessly connected affiliated STA, respectively, via antennas. Examples of the process of converting a wireless frame into a wireless signal include a convolutional encoding process, an interleaving process, a subcarrier modulation process, an inverse fast Fourier transform process, an orthogonal frequency division multiplexing (OFDM) modulation process, and a frequency conversion process. Furthermore, the wireless signal processing unit 230 converts the wireless signal received from the sharing AP 10 via the antenna into a wireless frame. Furthermore, the wireless signal processing unit 240 converts the wireless signal received from the terminal apparatus 30 via the antenna into a wireless frame. Examples of the conversion processing from the wireless signal to the wireless frame include frequency conversion processing, OFDM demodulation processing, fast Fourier transform processing, subcarrier demodulation processing, deinterleaving processing, and Viterbi decoding processing. The wireless signal processing units 230 and 240 extract the MAC frame from the converted wireless frame. In addition, the wireless signal processing units 230 and 240 input the extracted MAC frame to the frame processing unit 220.

### 1.1.3.3 Functional Configuration of Terminal Apparatus

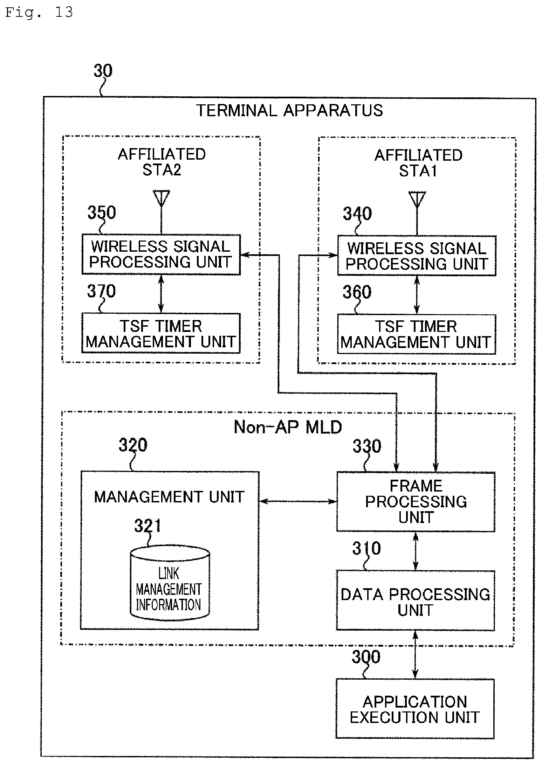

Fig. 13 is a block diagram showing an example of the functional configuration of the terminal apparatus according to the first embodiment.

The terminal apparatus 30 functions as a computer including an application execution unit 300, a data processing unit 310, a management unit 320, a frame processing unit 330, wireless signal processing units 340 and 350, and TSF timer management units 360 and 370. The application execution unit 300 is a functional block that executes processing corresponding to the seventh layer. The data processing unit 310 is a functional block that executes processing corresponding to the LLC sub-layer of the second layer and the third to sixth layers. The management unit 320 and the frame processing unit 330 are functional blocks that execute processing corresponding to the MAC sub-layer of the second layer. The wireless signal processing units 340 and 350 and the TSF timer management units 360 and 370 are functional blocks that execute processing corresponding to the first layer. The data processing unit 310, the management unit 320, and the frame processing unit 330 function as a non-AP MLD. The wireless signal processing unit 340 and the TSF timer management unit 360 function as an affiliated STA1. The wireless signal processing unit 350 and the TSF timer management unit 370 function as an affiliated STA2.

The application execution unit 300 executes an application on the basis of data input from the data processing unit 310. In addition, the application execution unit 300 inputs data to the data processing unit 310. For example, the application execution unit 300 can display information regarding the application on the display 35. In addition, the application execution unit 300 can work on the basis of an operation of the input interface.

The data processing unit 310 outputs data input from the application execution unit 300 via the LLC layer to the frame processing unit 330. The data processing unit 310 also outputs data input from the frame processing unit 330 to the application execution unit 300 via the LLC layer.

The management unit 320 controls the logical wireless connection between an AP MLD and a non-AP MLD in a multi-AP transmission method. For example, the management unit 320 generates an association request on the basis of a beacon frame regarding multi-AP connection from the shared AP 20. The management unit 320 stores link management information 321. The management unit 320 also stores information included in the beacon frame regarding the multi-AP connection from the shared AP 20 in the multi-AP management information 121.

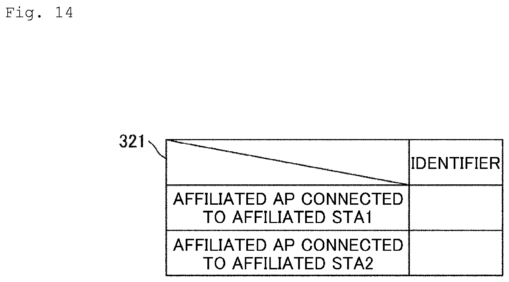

Fig. 14 is a diagram showing an example of a data structure of link management information stored in the terminal apparatus according to the first embodiment. Fig. 14 shows a data structure of the link management information 321 as an example of information stored in terminal apparatus 30 in addition to the information included in the beacon frame.

As shown in Fig. 14, the link management information 321 stores information on an affiliated AP physically connected to each of the affiliated STA1 and the affiliated STA2 in the terminal apparatus 30 in the multi-AP transmission method. The information on the affiliated AP physically connected to each of the affiliated STA1 and the affiliated STA2 specifically includes, for example, an identifier.

The identifier includes, for example, a MAC address of an affiliated AP. In the case of the connection example shown in Fig. 1, the link management information 321 stores the MAC address of the affiliated AP1 connected to the affiliated STA1 and the MAC address of the affiliated AP2 connected to the affiliated STA2.

Referring again to Fig. 10, the functional configuration of the terminal apparatus 30 will be described.

The management unit 320 stores information equivalent to the time management information 123 on the basis of a beacon frame related to time synchronization from the shared AP 20. Then, the management unit 320 manages a deviation between the TSF timer of the shared AP 20 and a TSF timer applied to each of the non-AP MLD, the affiliated STA1, and the affiliated STA2. Specifically, the management unit 320 notifies the TSF timer management unit 360 of information on the TSF timer of the shared AP 20-1 including the affiliated AP1 that is a wireless connection destination of the affiliated STA1. The management unit 320 notifies the TSF timer management unit 370 of information on the TSF timer of the shared AP 20-2 including the affiliated AP2 that is a wireless connection destination of the affiliated STA2. In addition, when the information on the reference timer is included in the beacon frame related to time synchronization from the shared AP 20, the management unit 320 may synchronize the TSF timer of the non-AP MLD with the reference timer.

When data is input from the data processing unit 310, the frame processing unit 330 adds a MAC header to the input data to generate a MAC frame. Then, the frame processing unit 330 distributes the MAC frame to any of the wireless signal processing units 340 and 350. The frame processing unit 330 may determine a distribution destination of the MAC frame in accordance with a TID.

Furthermore, when a MAC frame is input from the wireless signal processing units 340 and 350, the frame processing unit 330 extracts data from the MAC frame and outputs the extracted data to the data processing unit 310 or the management unit 320 depending on the type of MAC frame. Specifically, when the MAC frame is a data frame, the frame processing unit 330 inputs the data to the data processing unit 310. When the MAC frame is a management frame or a control frame, the frame processing unit 330 inputs the data to the management unit 320.

The wireless signal processing units 340 and 350 add a preamble and the like to the MAC frame input from the frame processing unit 330 to generate a wireless frame. The wireless signal processing units 340 and 350 convert the generated wireless frame into a wireless signal. In addition, the wireless signal processing units 340 and 350 radiate (transmit) the converted wireless signal via the antenna. The conversion process from a wireless frame to a wireless signal includes, for example, convolutional encoding processing, interleaving processing, sub-carrier modulation processing, inverse fast Fourier transform processing, OFDM modulation processing, and frequency conversion processing. In addition, the wireless signal processing units 340 and 350 convert a wireless signal received from the corresponding shared AP 20 via the antenna into a wireless frame. Examples of the conversion processing from the wireless signal to the wireless frame include frequency conversion processing, OFDM demodulation processing, fast Fourier transform processing, subcarrier demodulation processing, deinterleaving processing, and Viterbi decoding processing. The wireless signal processing units 340 and 350 extract the MAC frame from the converted wireless frame. Then, the wireless signal processing units 340 and 350 input the extracted MAC frames to the frame processing unit 330.

The TSF timer management units 360 and 370 manage the TSF timer of the affiliated STA1 and the TSF timer of the affiliated STA2, respectively, on the basis of the information on the offset notified of by the management unit 320. Specifically, the TSF timer management unit 360 synchronizes the TSF timer of the affiliated STA1 with the TSF timer of the shared AP 20-1 notified by the management unit 320. The TSF timer management unit 370 synchronizes the TSF timer of the affiliated STA2 with the TSF timer of the shared AP 20-1 notified by the management unit 320.

In this manner, the terminal apparatus 30 generates three types of TSF timers to be applied to the non-AP MLD, the affiliated STA1, and the affiliated STA2, respectively, from the oscillator 37. Then, the terminal apparatus 30 synchronizes the TSF timer of the non-AP MLD with the reference timer, synchronizes the TSF timer of the affiliated STA1 with the TSF timer of the shared AP 20-1, and synchronizes the TSF timer of the affiliated STA2 with the TSF timer of the shared AP 20-2.

### 1.2 Operations

Next, operations of the communication system according to the first embodiment will be described.

### 1.2.1 Time Synchronization Process

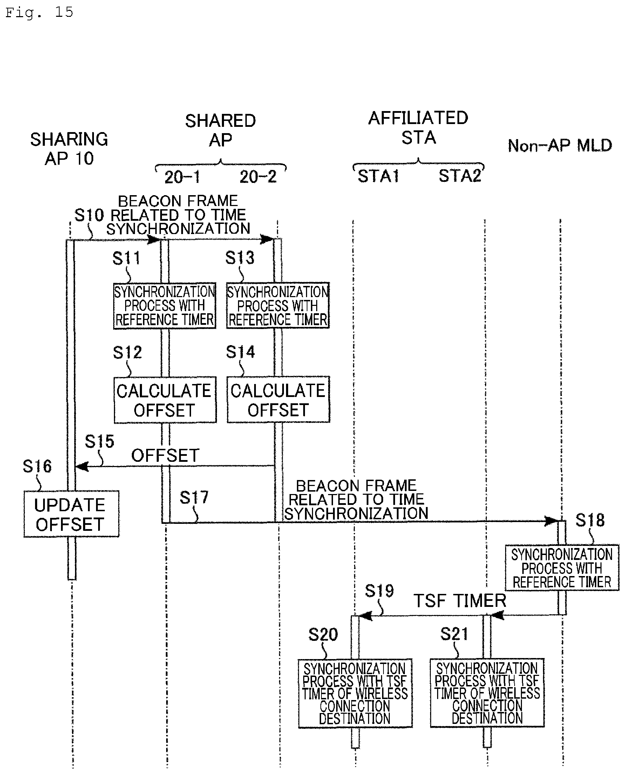

Fig. 15 is a sequence diagram showing an example of a time synchronization process in the communication system according to the first embodiment. Fig. 15 shows, in a state where multi-AP connection is established, a flow of information exchanged between the sharing AP 10 (AP MLD), the shared AP 20-1 (affiliated AP1), the shared AP 20-2 (affiliated AP2), the affiliated STA1, the affiliated STA2, and the non-AP MLD when the time synchronization processing is performed.

The sharing AP 10 transmits a beacon frame including the time management information 123 to each of the shared APs 20-1 and 20-2 (S10).

The shared AP 20-1 executes a synchronization process with a reference timer on the basis of the beacon frame related to time synchronization received in the process of S10 (S11). Specifically, the shared AP 20-1 compares a timestamp of the reference timer included in the beacon frame received in the process of S10 with the TSF timer of the shared AP 20-1. As a result of the comparison, when an offset between the timestamp of the reference timer and the TSF timer of the shared AP 20-1 is equal to or greater than a threshold value, the shared AP 20-1 overwrites the TSF timer of the shared AP 20-1 with the timestamp of the reference timer. When the offset between the timestamp of the reference timer and the TSF timer of the shared AP 20-1 is less than the threshold value, the shared AP 20-1 uses the TSF timer of the shared AP 20-1 as it is.

After the synchronization process in S11, the shared AP 20-1 calculates an offset of the TSF timer of the shared AP 20-1 with respect to the reference timer (S12).

Similarly, the shared AP 20-2 executes a synchronization process with the reference timer on the basis of the beacon frame related to time synchronization received in the process of S10 (S13). Specifically, the shared AP 20-2 compares the timestamp of the reference timer included in the beacon frame received in the process of S10 with the TSF timer of the shared AP 20-2. As a result of the comparison, when the offset between the timestamp of the reference timer and the TSF timer of the shared AP 20-2 is equal to or greater than the threshold value, the shared AP 20-2 overwrites the TSF timer of the shared AP 20-2 by the reference timer. When the offset between the timestamp of the reference timer and the TSF timer of the shared AP 20-2 is less than the threshold value, the shared AP 20-2 uses the TSF timer of the shared AP 20-2 as it is.

After the synchronization process in S13, the shared AP 20-2 calculates an offset of the TSF timer of the shared AP 20-2 with respect to the reference timer (S14).

After the process of S13 and the process of S14, each of the shared APs 20-1 and 20-2 notifies the sharing AP 10 of the calculated offset (S15).

The sharing AP 10 updates the offset stored in the time management information 123 on the basis of the offset notified of in the process of S15 (S16). The offset updated in the process of S16 is reflected in a beacon frame related to time synchronization to be transmitted next from the sharing AP 10. In this manner, the sharing AP 10 manages the TSF timer of the shared AP 20 to which it belongs by periodically giving a notification of the beacon frame related to time synchronization and obtaining the latest offset information.

Each of the shared APs 20-1 and 20-2 transmits the beacon frame for time synchronization to the non-AP MLD via a wirelessly connected affiliated STA (S17).

The non-AP MLD executes a synchronization process with the reference timer on the basis of the beacon frame related to time synchronization received in the process of S17 (S18). Specifically, the non-AP MLD calculates TSF timers of the shared APs 20-1 and 20-2 on the basis of the timestamp and the offset of the shared AP 20 included in the beacon frame received in the process of S17. Then, the non-AP MLD overwrites the TSF timer of the non-AP MLD by the calculated TSF timer. Note that, when a reference timer can be calculated on the basis of the timestamp and offset of the shared AP 20 included in the beacon frame received in the process of S17, the non-AP MLD may overwrite the TSF timer of the non-AP MLD by the reference timer.

The non-AP MLD gives notifications of the TSF timers of the shared APs 20-1 and 20-2 calculated in the process of S18 to the corresponding affiliated STAs, respectively (S19).

The affiliated STA1 executes a synchronization process with the TSF timer of the wirelessly connected shared AP 20-1 on the basis of the TSF timer received in the process of S19 (S20). Specifically, the affiliated STA1 overwrites the TSF timer of the affiliated STA1 by the TSF timer of the shared AP 20-1.

Similarly, the affiliated STA2 executes a synchronization process with the TSF timer of the wirelessly connected shared AP 20-2 on the basis of the TSF timer received in the process of S19 (S21). Specifically, the affiliated STA2 overwrites the TSF timer of the affiliated STA2 by the TSF timer of the shared AP 20-2.

As a result, the time synchronization process ends.

### 1.2.2 R-TWT Cooperative Process

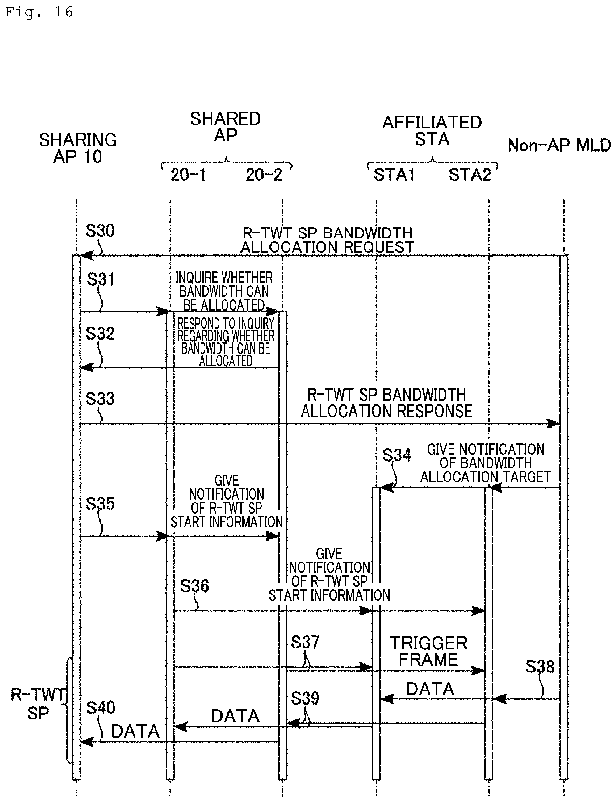

Fig. 16 is a sequence diagram showing an example of an R-TWT cooperative process in the communication system according to the first embodiment. Fig. 16 shows, as an example, a series of processes until a communication process is performed in an R-TWT service period (SP) on the basis of the occurrence of periodic low latency traffic between the sharing AP 10 and the non-AP MLD.

When it is expected that low latency traffic will occur (start) in the application execution unit 300, the non-AP MLD transmits a bandwidth allocation request in the R-TWT SP to the sharing AP 10 (S30).

When receiving the bandwidth allocation request in the R-TWT SP, the sharing AP 10 inquires of each of the shared APs 20-1 and 20-2 whether an R-TWT SP can be set and whether a bandwidth used for traffic transmission/reception can be allocated (S31).

Each of the shared APs 20-1 and 20-2 transmits, to the sharing AP 10 as a response, determination results regarding whether an R-TWT SP can be set and whether a bandwidth used for traffic transmission/reception can be allocated, in response to the inquiry received in the process of S31 (S32).

The sharing AP 10 determines a shared AP 20 for setting an R-TWT SP on the basis of the response received in the process of S32, and transmits it to the non-AP MLD as a response to the bandwidth allocation request received in the process of S30 (S33). When a plurality of shared APs 20-1 and 20-2 can be handled, highly reliable bandwidth allocation can be performed by an aligned link process in which communication is performed simultaneously on a plurality of wireless links in the same R-TWT SP.

When receiving a response to the bandwidth allocation request, the non-AP MLD determines an affiliated STA to transmit and receive low latency traffic in the R-TWT SP, and notifies each of the affiliated STA1 and the affiliated STA2 of it (S34).

The sharing AP 10 notifies the shared APs 20-1 and 20-2 of information on the start of the R-TWT SP (S35). The information on the start of the R-TWT SP includes, for example, the start time, duration, interval length, and the like of the R-TWT SP. Here, the start time of the R-TWT SP which is notified of by the sharing AP 10 is notified of using a reference timer.

Each of the shared APs 20-1 and 20-2 transmits a beacon frame including the information on the start of the R-TWT SP received in the process of S35 to the non-AP MLD via a wirelessly connected affiliated STA (S36).

Here, the start time of the R-TWT SP notified of by each of the shared APs 20-1 and 20-2 is notified of using the TSF timer of its own station so as to synchronize with the start time of the R-TWT SP notified of using the reference timer. That is, when there is an offset between the reference timer and the TSF timer of its own station, the start time of the R-TWT SP in the TSF timer of its own station is set to a time shifted by the offset from the start time of the R-TWT SP in the reference timer. Specifically, when the reference timer is ahead of the TSF timer of the shared AP 20-1 by X seconds, the shared AP 20-1 sets a time delayed by X seconds from the start time of the R-TWT SP in the reference timer as a start time of the R-TWT SP in the TSF of the shared AP 20-1.

Note that, in the case of executing an aligned link process, the beacon frame transmitted in the process of S36 includes information indicating that a plurality of wireless links are allocated to the same R-TWT SP.

When the R-TWT SP starts, the shared AP 20 to which the bandwidth is allocated, out of the shared APs 20-1 and 20-2, transmits a trigger frame to the corresponding affiliated STA (S37).

When low latency traffic occurs in the application execution unit 300, the non-AP MLD outputs data to the corresponding affiliated STA (S38).

The affiliated STA that has received the data in the process of S38 transmits the data to the corresponding shared AP 20, on the basis of information on bandwidth allocation included in the trigger frame received in the process of S37 (S39).

The shared AP 20 that has received the data in the process of S39 transfers the data to the sharing AP 10 (S40).

Such processes of S37 to S40 are repeatedly executed in a plurality of R-TWT SPs that are set for respective interval lengths included in the information on the start of the R-TWT SP.

As a result, the R-TWT cooperative process ends.

### 1.3 Effects According to First Embodiment

According to the first embodiment, the sharing AP 10 transmits a timestamp for a reference timer to the shared APs 20-1 and 20-2. Each of the shared APs 20-1 and 20-2 transmits an offset of the TSF timer of its own station with respect to the reference timer to the sharing AP 10, on the basis of the timestamp related to the reference timer. The sharing AP 10 shares the offset received from each of the shared APs 20-1 and 20-2 with the shared APs 20-1 and 20-2. Thereby, the sharing AP 10 and each of the shared APs 20-1 and 20-2 can share information on time synchronization.

The terminal apparatus 30 also receives a beacon frame related to time synchronization from the shared APs 20-1 and 20-2. Thereby, the TSF timer of the non-AP MLD in the terminal apparatus 30, the TSF timer of the affiliated STA1, and the TSF timer of the affiliated STA2 can be synchronized with the reference timer, the TSF timer of the shared AP 20-1, and the TSF timer of the shared AP 20-2, respectively. For this reason, in a cooperative process in an R-TWT SP, time synchronization between wireless links can also be performed while synchronizing the affiliated STA1 and the affiliated STA2 with the wirelessly connected shared APs 20-1 and 20-2, respectively.

In addition, by an aligned link process, the affiliated STA1 and the affiliated STA2 can transmit data in the same R-TWT SP via wireless links with the shared APs 20-1 and 20-2, respectively. Thereby, for example, it is possible to perform redundant communication for transmitting the same data on a plurality of wireless links in the same R-TWT SP. For this reason, highly reliable data communication can be performed.

### 2. Second Embodiment

A second embodiment will be described below. The second embodiment differs from the first embodiment in that a TSF timer generated by the oscillator 16 is not used as it is as a reference timer. Configurations and operations different from those in the first embodiment will be mainly described below. Descriptions of configurations and operations equivalent to those in the first embodiment will be omitted as appropriate.

### 2.1 Sharing AP

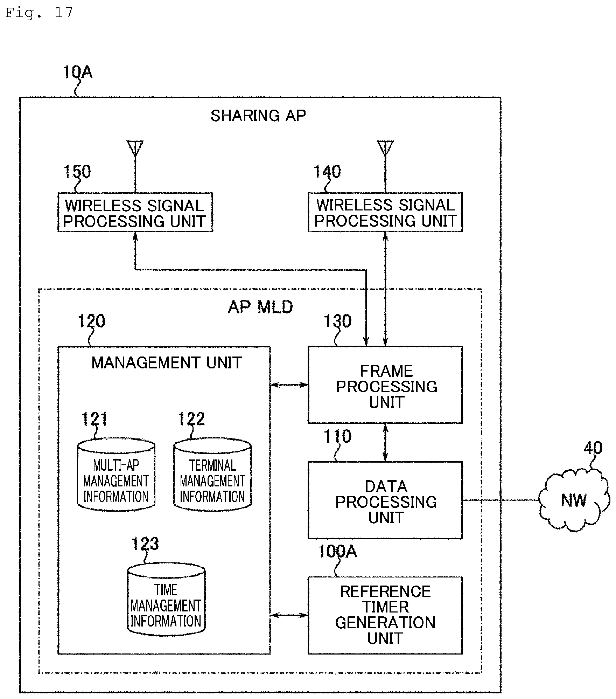

Fig. 17 is a block diagram showing an example of a functional configuration of a sharing AP according to the second embodiment. Fig. 17 corresponds to Fig. 5 in the first embodiment.

As shown in Fig. 17, a sharing AP 10A includes a reference timer generation unit 100A instead of the reference timer generation unit 100.

The reference timer generation unit 100A generates a reference timer on the basis of TSF timers of the respective shared APs 20-1 and 20-2 in addition to an output of the oscillator 16. The reference timer generation unit 100A outputs the generated reference timer to the management unit 120.

Specifically, for example, the reference timer generation unit 100A updates the reference timer with an average value of the TSF timer generated from the oscillator 16, the TSF timer of the shared AP 20-1, and the TSF timer of the shared AP 20-2. In the updating of the reference timer, a TSF timer, which is offset by a threshold value or more from the reference timer before updating, may be excluded from the calculation of the average value.

Note that, in the second embodiment, the accuracy of the TSF timer generated by the oscillator 25 included in the shared AP 20 is high enough for use as a reference timer.

### 2.2 Reference Timer Generation Process

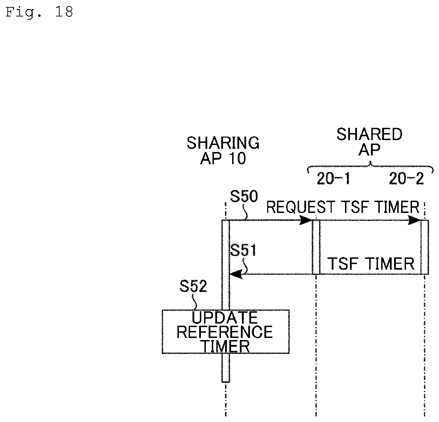

Fig. 18 is a sequence diagram showing an example of a reference timer generation process in a communication system according to the second embodiment. Fig. 18 shows exchange of information between the sharing AP 10A and the shared AP 20 when the reference timer is generated in the sharing AP 10A.

The sharing AP 10A periodically requests information on a TSF timer from the shared APs 20-1 and 20-2 (S50).

In response to the request for the TSF timer, each of the shared APs 20-1 and 20-2 notifies the sharing AP 10A of information on the TSF timer of its own station (S51).

The sharing AP 10A updates the reference timer on the basis of the TSF timers of the shared APs 20-1 and 20-2 received in the process of S51 and the TSF timer generated by the oscillator 16 (S52).

Thus, the reference timer generation process ends.

### 2.3 Effects According to Second Embodiment

According to the second embodiment, a reference timer is generated as an average value of TSF timers of a plurality of access points. Thereby, even when the accuracy is degraded in any TSF timer among TSF timers of a plurality of access points, the reference timer can be generated without being affected by the degradation. For this reason, a more stable reference timer can be generated than when generating a reference timer from a single TSF timer.

### 3. Modification Example etc.

Note that various modifications can be made to the first and second embodiments described above.

### 3.1 First Modification Example

In the first and second embodiments described above, the oscillators 16 included in the sharing APs 10 and 10A have been described as being capable of generating a TSF timer with high accuracy to the extent that the TSF timer can be used as a reference timer, but this is not limiting. For example, the oscillators 16 included in the sharing APs 10 and 10A may not be able to generate a TSF timer with high accuracy to the extent that the TSF timer can be used as a reference timer. In this case, the sharing APs 10 and 10A may acquire the TSF timer from the outside of the communication system 1.

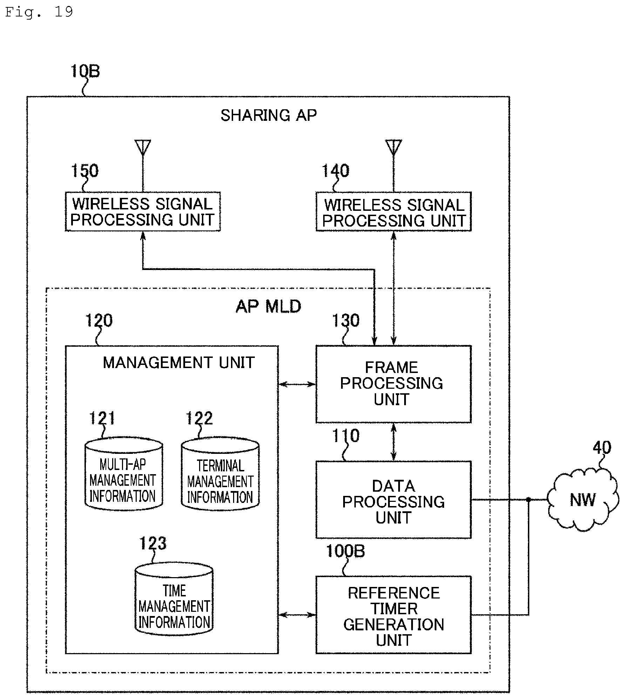

Fig. 19 is a block diagram showing an example of a functional configuration of a sharing AP according to the first modification example. Fig. 19 corresponds to Fig. 5 in the first embodiment.

As shown in Fig. 19, a sharing AP 10B includes a reference timer generation unit 100B. The reference timer generation unit 100B acquires a TSF timer having accuracy to the extent that the TSF timer can be used as a reference timer from the outside of the communication system 1 via the network 40.

Specifically, for example, the reference timer generation unit 100B may acquire a TSF timer from a time server on the network 40. The time server may be mounted by a network time protocol (NTP) server. In this case, communication between the reference timer generation unit 100B and the NTP server may be performed by an NTP. To implement more accurate time synchronization, communication between the reference timer generation unit 100B and the NTP server may be performed in accordance with IEEE 802.1AS-2011 standard.

In addition, for example, the sharing AP 10B may include a global positioning system (GPS) receiver. In this case, the reference timer generation unit 100B may generate a TSF timer on the basis of time information acquired from the GPS receiver.

According to the first modification example, the sharing AP 10B can generate a reference timer when synchronizing various apparatuses in the communication system 1, even when the sharing AP 10B does not include an oscillator 16 capable of generating a highly accurate TSF timer.

In addition, when a time synchronization process is performed in a wider communication system using a plurality of multi-AP connections by a plurality of sharing APs, time synchronization between a plurality of sharing APs can be easily performed.

### 3.2 Second Modification Example

Further, in the first and second embodiments described above, description has been given of a case where the AP MLD and each of the plurality of affiliated APs are disposed at locations apart from each other, but this is not limiting.

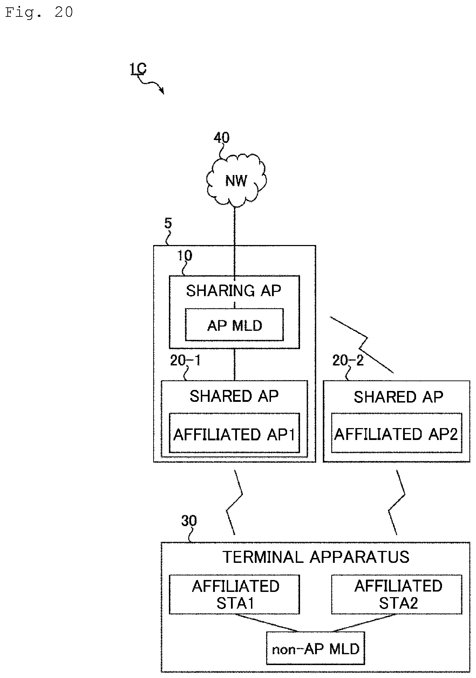

Fig. 20 is a block diagram showing an example of the configuration of a communication system according to a second modification example. Fig. 20 corresponds to Fig. 1 in the first embodiment.

As shown in Fig. 20, in a communication system 1C, at least one affiliated AP (affiliated AP1) among a plurality of affiliated APs may be provided within the same housing 5 as the AP MLD. In this case, communication between the AP MLD and the affiliated AP1 may be performed in a wired manner.

According to the above-described configuration, the sharing AP 10 including the AP MLD and the shared AP 20-1 including the affiliated AP1 are provided in the same housing 5. For this reason, the TSF timer of the sharing AP 10 and the TSF timer of the shared AP 20-1 may be the same.

According to the second modification example, the TSF timer of the affiliated AP1 is synchronized to be made to coincide with a reference timer, and the TSF of the affiliated AP2 is made to synchronize with the reference timer, thereby making it possible to perform time synchronization of the entire communication system 1C.

### 3.3 Others

Note that TSF timers and offsets between the sharing AP 10, the shared AP 20, and the terminal apparatus 30 may be values that take into account propagation delays due to wireless communication and processing delays within the devices.

In addition, the time synchronization process, the R-TWT cooperative control process, and the reference timer generation process in the sharing AP 10, the shared AP 20, and the terminal apparatus 30 can be stored as a program that can be executed by a processor, which is a computer. In addition, the program can be stored in a storage medium of an external storage device such as a magnetic disk, an optical disc, or a semiconductor memory to be distributed. Each of the processors of the sharing AP 10, the shared AP 20, and the terminal apparatus 30 can read a program stored on a storage medium of an external storage device, and can execute a time synchronization process, an R-TWT cooperative control process, and a reference timer generation process by controlling the operation of the processor by the read program.

Note that the present invention is not limited to the above-described embodiment and various modifications can be made in the implementation stage without departing from the spirit and scope of the invention. The embodiments may be combined as appropriate. In that case, the combined effects can be obtained. Further, the foregoing embodiments include various inventions and various inventions can be extracted by combinations selected from the plurality of disclosed constituent elements. For example, even when some of the constituent elements are deleted from all the constituent elements described in the embodiments, the configuration from which these constituent elements are deleted can be extracted as an invention as long as the problem can be solved and the effects can be obtained.

### [Reference Signs List]

1, 1C Communication system
5 Housing
10 Sharing AP
20 Shared AP
30 Terminal apparatus
40 Network
11, 21, 31 CPU
12, 22, 32 ROM
13, 23, 33 RAM
14, 24, 34 Wireless communication module
15 Wired communication module
16, 25, 37 Oscillator
35 Display
36 Storage
100, 100A, 100B Reference timer generation unit
110, 310 Data processing unit
120, 210, 320 Management unit
130, 220, 330 Frame processing unit
140, 150, 230, 240, 340, 350 Wireless signal processing unit
300 Application execution unit
360, 370 TSF timer management unit
121 Multi-AP management information
122 Terminal management information
123 Time management information
211, 321 Link management information

## Claims

1. An access point which is a first access point in a communication system including the first access point, a second access point, a third access point, and a terminal apparatus, the first access point being configured to:
transmit a timestamp related to a first timer corresponding to the first access point to the second access point and the third access point;
receive a first offset between the first timer and a second timer corresponding to the second access point from the second access point;
receive a second offset between the first timer and a third timer corresponding to the third access point from the third access point; and
transmit the first offset and the second offset to each of the second access point and the third access point.

2. The access point according to claim 1, wherein the first access point is configured to receive data from the terminal apparatus via each of a first wireless link between the second access point and the terminal apparatus and a second wireless link between the third access point and the terminal apparatus from a first time based on the first timer over a first period, in response to a request from the terminal apparatus.

3. An access point which is a second access point in a communication system including a first access point, the second access point, a third access point, and a terminal apparatus, the second access point being configured to:
receive information indicating a first period starting from a first time based on a first timer corresponding to the first access point from the first access point; and
receive data from the terminal apparatus via a first wireless link between the second access point and the terminal apparatus over a second period starting from a second time based on a second timer corresponding to the second access point and matching the first period, based on the information and a first offset between the first timer and the second timer.

4. A terminal apparatus in a communication system including a first access point, a second access point, a third access point, and the terminal apparatus, the terminal apparatus being configured to:
receive information on a second timer corresponding to the second access point and a third timer corresponding to the third access point;
communicate with the second access point via a first wireless link based on the second timer; and
communicate with the third access point via a second wireless link based on the third timer.

5. The terminal apparatus according to claim 4, wherein the terminal apparatus is configured to:
transmit data to the first access point via a first wireless link between the terminal apparatus and the second access point over a second period that matches a first period starting from a first time based on a first timer corresponding to the first access point and starts from a second time based on the second timer; and
transmit data to the first access point via a second wireless link between the terminal apparatus and the third access point over a third period that matches the first period and starts from a third time based on the third timer.

6. A communication method performed by an access point which is a first access point in a communication system including the first access point, a second access point, a third access point, and a terminal apparatus, the communication method comprising:
transmitting a timestamp related to a first timer corresponding to the first access point to the second access point and the third access point;
receiving a first offset between the first timer and a second timer corresponding to the second access point from the second access point;
receiving a second offset between the first timer and a third timer corresponding to the third access point from the third access point; and
transmitting the first offset and the second offset to each of the second access point and the third access point.

7. A communication method performed by an access point which is a second access point in a communication system including a first access point, the second access point, a third access point, and a terminal apparatus, the communication method comprising:
receiving information indicating a first period starting from a first time based on a first timer corresponding to the first access point from the first access point; and
receiving data from the terminal apparatus via a first wireless link between the second access point and the terminal apparatus over a second period starting from a second time based on a second timer corresponding to the second access point and matching the first period, based on the information and a first offset between the first timer and the second timer.

8. A communication method performed by a terminal apparatus in a communication system including a first access point, a second access point, a third access point, and the terminal apparatus, the communication method comprising:
receiving information on a second timer corresponding to the second access point and a third timer corresponding to the third access point;
communicating with the second access point via a first wireless link based on the second timer; and
communicating with the third access point via a second wireless link based on the third timer.
